# FASCICULE DE BREVET EUROPEEN

(11) **EP 1 115 195 B1**
(45) Date de publication et mention de la délivrance du brevet: **02.09.2009**
(21) Numéro de dépôt: 00403115.9
(22) Date de dépôt: 09.11.2000
(51) Int. Cl.: H02M 3/335

(54) **Redresseur synchrone auto-commandé**
Selbstgesteuerter Synchrongleichrichter
Self-driven synchronous rectifier

(30) Priorité: 03.01.2000 FR 0000007
(43) Date de publication de la demande: 11.07.2001
(73) Titulaire: Power Supply Systems Holding ( The Netherlands) B.V., 1017 CA Amsterdam (NL)
(72) Inventeur: Diallo, Almadidi, 35235 Thorigne-Fouillard (FR); Ceunebrock, Patrick, 22560 Pleumeur Bodou (FR)
(74) Mandataire: Thévenet, Jean-Bruno

(56) Documents cités:
- EP-A- 0 665 634
- EP-A- 0 884 829
- US-A- 5 708 571

## Description

L'invention concerne un redresseur synchrone auto-commandé. L'invention concerne en particulier un redresseur synchrone auto-commandé utilisé dans un convertisseur AC/DC ou DC/DC.

L'invention concerne un redresseur synchrone, commandé par enroulement couplé, ou auto-commandé en transfert direct d'énergie symétrique ou asymétrique. Dans la suite du texte, l'expression " redresseur synchrone auto-commandé " désigne aussi " redresseur synchrone commandé par enroulement couplé ".

On connaît des systèmes de conversion asymétriques comprenant une source de tension initiale débitant dans un primaire de transformateur, monté en parallèle avec un interrupteur principal. Le secondaire du transformateur est monté en cascade avec un redresseur synchrone auto-commandé et un filtre. La sortie du filtre débit une tension continue contrôlée dans une application. Dans ce type de chaîne de conversion, le redresseur synchrone auto-commandé a pour but de
- délivrer à l'application, à travers le filtre, l'énergie transférée par le transformateur dans la période conductrice de l'interrupteur principal, et
- bloquer le transfert dans la période non-conductrice de l'interrupteur principal, l'application étant alimentée par la bobine du filtre durant cette période non-conductrice de l'interrupteur principal.

Le redresseur synchrone auto-commandé est constitué, en asymétrique, de deux MOSFETs agencée de manière à assurer les deux fonctions ci-dessus énumérées. Par exemple
le redresseur synchrone auto-commandé comprend, en asymétrique
- une première et une seconde sortie de redresseur,
- un premier transistor MOSFET connecté entre la première extrémité de secondaire de transformateur et la première sortie du redresseur, et ayant une connexion de grille à la seconde extrémité du secondaire du transformateur,
- un second transistor MOSFET connecté entre la première sortie du redresseur et la seconde sortie du redresseur, et ayant une connexion de grille à la première extrémité de transformateur.

C'est la tension au secondaire du transformateur qui commande les deux MOSFETs.

Dans un souci économique, les constructeurs souhaitent développer des convertisseurs offrant au sein d'un même produit, un large plage de tension d'entrée. Cela implique que le voltage au secondaire du transformateur sera lui aussi dans une large plage de tension. Or, le voltage au secondaire du transformateur constitue aussi le signal de grille des MOSFETs du redresseur. Les tensions applicables aux grilles des MOSFETs sont limitées. Si une tension trop importante est appliquée sur la grille d'un MOSFET, celui-ci peut être détruit. Pour protéger les MOSFET d'une surtension de grille, il est connu de monter les connections de grille en série avec un pont diviseur de tension passif. Le brevet américain US 5,708,571 divulgue, par exemple, un redresseur synchrone dont les transistors sont munis de circuits de protection non contrôlables. Cependant, la présence de ce diviseur de tension constitue une source de pertes importantes lorsque la tension au secondaire du transformateur est trop faible ou trop élevée. La tension appliquée à la grille des MOSFETs est trop faible ou trop élevée pour commander les MOSFETs de façon optimale, c'est à dire en offrant une dynamique de commande optimale et la plus économique en pertes. Il en résulte que pour des faibles tensions de sortie, la puissance transférée envisageable est très faible, et pour les tensions de sortie plus élevées, la dynamique de tension d'entrée sera réduite.

L'un des buts de la présente invention est de proposer un redresseur synchrone auto-commandé présentant une protection de grille contre les surtensions de grille, autorisant une grande variation de la tension d'entrée, tout en ayant des performances optimales pour les courants et les tensions de sortie.

A cet effet, l'invention concerne un redresseur synchrone auto-commandé connecté entre un enroulement secondaire de transformateur, et un filtre LC.

Ledit redresseur synchrone auto-commandé comprend deux transistors MOSFET ayant chacun une connexion de grille , lesdites connexions de grille étant chacune montée en série avec un circuit de protection de grille.

Selon l'invention, chaque circuit de protection de grille , comprend un pont diviseur , et, montée en parallèle avec le pont diviseur , un interrupteur ayant une position ouverte et une position fermée. En outre, le redresseur comprend un dispositif de commande des interrupteurs , ledit dispositif de commande recevant un signal d'entrée proportionnel à la tension à l'entrée du redresseur et émettant des signaux de sortie pour commander les interrupteurs .

Dans une première forme de réalisation asymétrique, le redresseur est connecté entre l'enroulement secondaire de transformateur ayant une première et une seconde extrémités de transformateur , et le filtre LC ayant une première et une seconde entrée de filtre , et comprend :
- une première et une seconde entrée de redresseur connectées respectivement à la première et la seconde extrémités de transformateur
- une première et une seconde sortie de redresseur, la seconde sortie de redresseur étant connectée à la seconde entrée de redresseur,
- un transistor MOSFET direct connecté entre la première entrée de redresseur et la première sortie de redresseur et ayant une connexion de grille connectée à la seconde entrée de redresseur ladite connexion de grille étant montée en série avec le circuit de protection de grille
- un transistor MOSFET de roue libre connecté entre la première sortie de redresseur et la seconde sortie de redresseur et ayant une connexion de grille connectée à la première entrée de redresseur ladite connexion de grille étant montée en série le circuit de protection de grille.

Dans une seconde forme de réalisation symétrique, l'enroulement secondaire de transformateur comprend un premier et un second sous-enroulements en opposition de phase, chaque sous-enroulement comprenant une première et une seconde extrémités de transformateur, et le filtre LC a une première et une seconde entrée de filtre.

Le redresseur synchrone auto-commandé comprend
- une première et une seconde entrée de redresseur connectées respectivement aux extrémités de transformateur du premier sous-enroulement définissant un premier sous-ensemble
- une première et une seconde entrée de redresseur connectées respectivement aux extrémités de transformateur du second sous-enroulement définissant un second sous-ensemble
- une première et une seconde sortie de redresseur, la seconde sortie de redresseur étant connectée à la seconde entrée de redresseur du premier sous-ensemble.

Un des transistors MOSFET est connecté entre la première entrée de redresseur du premier sous-ensemble et la première sortie de redresseur et a une connexion de grille connectée à la seconde entrée de redresseur du premier sous-ensemble, ladite connexion de grille étant montée en série avec le circuit de protection de grille.

L'autre des transistor MOSFET est connecté entre la première entrée de redresseur du second sous-ensemble et la première sortie de redresseur et a une connexion de grille connectée à la seconde entrée de redresseur du second sous-ensemble, ladite connexion de grille étant montée en série avec le circuit de protection de grille

Dans un mode de fonctionnement, le dispositif de commande génère deux signaux de sortie indépendant l'un de l'autre, chaque signal commandant un des interrupteurs .

Dans un autre mode de fonctionnement le dispositif de commande génère deux signaux de sortie dépendant l'un de l'autre, chaque signal commandant un des interrupteurs .

Le dispositif de commande comprend des moyens pour générer au moins une valeur seuil , et des moyens de comparaison du signal d'entrée proportionnel à la tension d'entrée de redresseur avec ladite valeur seuil , et en ce que les signaux de sortie sont fonction du sens de la comparaison entre le signal d'entrée proportionnel à la tension d'entrée de redresseur avec ladite valeur seuil .

Le redresseur peut comprendre des moyens de mesure de tension comprenant une diode montée en série avec une capacité de mesure , et connectées entre la seconde entrée de redresseur et la première sortie de redresseur , le signal d'entrée étant piqué entre ladite diode et la capacité de mesure .

L'un des avantages de la présente invention résulte du contrôle dynamique de la tension de grille permettant, en fonction de la tension du secondaire du transformateur, de court-circuiter ou non le pont diviseur de tension. Ainsi, quelle que soit l'amplitude de la tension entrant dans le redresseur synchrone auto-commandé, les tensions de grille des MOSFETs sont optimisées pour limiter les pertes et conserver une dynamique de commutation optimale. De ce fait, pour les grandes variations de tension d'entrée, il est possible à tension égale, et à volume égal, de faire passer une puissance plus importante dans un convertisseur incluant un redresseur selon l'invention.

D'autres avantages et caractéristiques de la présente invention résulteront de la description qui va suivre en référence aux dessins annexés dans lesquels :
- La figure 1 est un diagramme schématique d'un redresseur synchrone auto-commandé asymétrique selon l'invention.
- La figure 2 est une représentation schématique d'un mode de réalisation d'un redresseur synchrone auto-commandé asymétrique selon l'invention.
- La figure 3 est un diagramme schématique d'un redresseur synchrone auto-commandé symétrique selon l'invention.

L'invention concerne un redresseur synchrone auto-commandé 1 symétrique ou asymétrique.

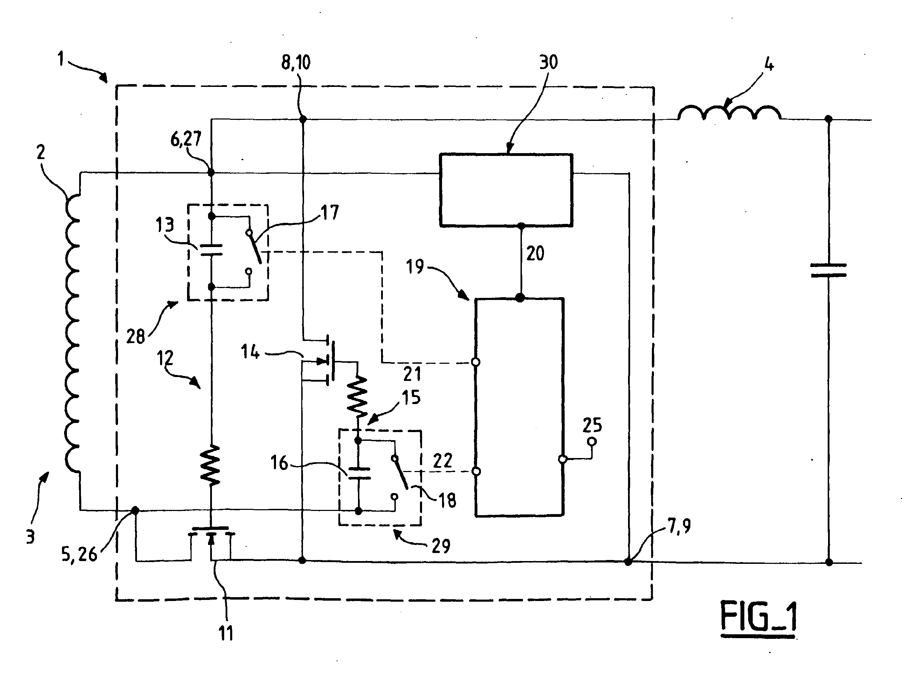

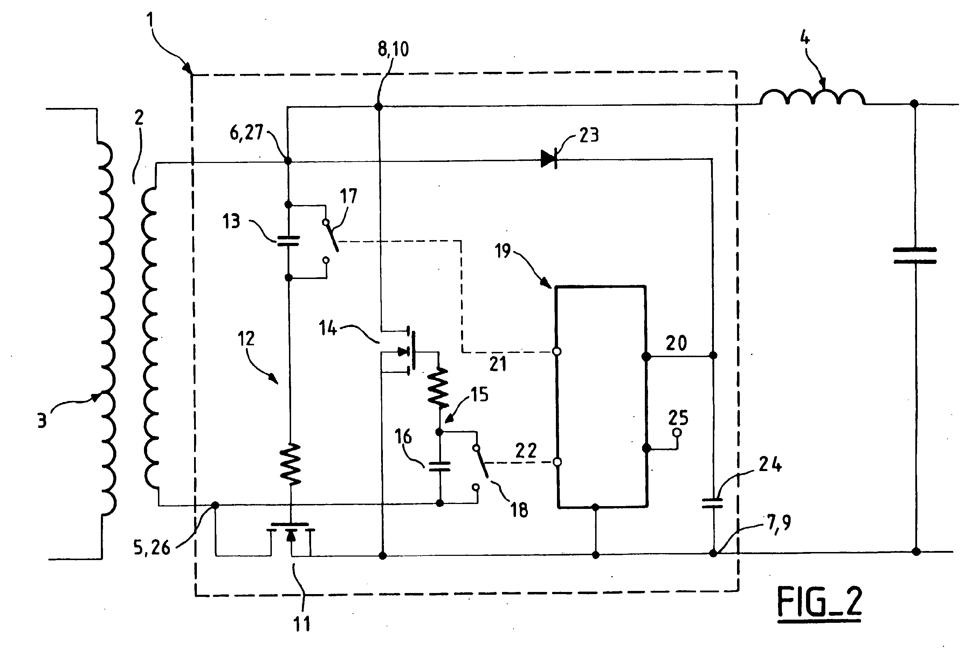

Dans le cas asymétrique représenté sur les figure 1 et 2, ledit redresseur synchrone auto-commandé 1 est monté entre le secondaire 2 d'un transformateur 3 et un filtre LC 4.

Plus particulièrement, le redresseur synchrone auto-commandé asymétrique 1 comprend une première et une seconde entrée de redresseur 26, 27 connectée à une première et une seconde extrémités de transformateur 5, 6 de l'enroulement secondaire 2 de transformateur 3 et une première et une seconde sortie de redresseur 9, 10 connectées à une première et une seconde entrée de filtre 7, 8 du filtre LC 4. la seconde sortie de redresseur 10 est connectée à la seconde entrée de redresseur 27.

Le redresseur synchrone auto-commandé asymétrique comprend classiquement :
- un transistor MOSFET direct 11 connecté entre la première entrée de redresseur 26 et la première sortie de redresseur 9 ; la connexion de grille 12 du transistor MOSFET 11 est connectée à la seconde entrée de redresseur 27 ; cette connexion de grille 12 est montée en serie avec un circuit de protection de grille 28,
- un transistor MOSFET de roue libre 14 connecté entre la première sortie de redresseur 9 et la seconde sortie de redresseur 10 ; la connection de grille 15 du transistor MOSFET de roue libre 14 est connectée à la premiere entrée de redresseur 26 ; cette connection de grille 15 étant monté en serie avec un circuit de protection de grille 29

Selon l'invention, chaque circuit de protection de grille 28, 29 comprend, un élément diviseur 13, 16 monté en parallèle avec un interrupteur 17, 18 ayant une position ouverte et une position fermée.

Cet élément diviseur 13, 16 constitue avec le condensateur intrinsèque ou l'impédance placée entre la grille et la source du MOSFET, un pont diviseur non dissipatif. Dans la suite du texte, par commodité, on attachera les références 13 et 14 aux ponts diviseurs.

De plus, le redresseur 1 comprend un dispositif de commande 19 des interrupteurs 17, 18. Ce dispositif de commande 19 reçoit un signal d'entrée 20 proportionnel à la tension à l'entrée du redresseur 1 et émet des signaux de sortie 21, 22 pour commander les interrupteurs 17, 18.

Le signal d'entrée 20 proportionnel à la tension à l'entrée du redresseur 1 est généré par des moyens de mesure de tension 30.

Le dispositif de commande 19 comprend en outre des moyens pour générer au moins une valeur seuil, et des moyens de comparaison du signal d'entrée 20 avec la valeur seuil. Les signaux de sortie 21, 22 sont fonction du sens de la comparaison entre le signal d'entrée 20 et la valeur seuil.

Le fonctionnement du redresseur asymétrique selon l'invention est le suivant:

La tension d'entrée du redresseur 1 présente, suivant les topologies, des formes diverses qui sont assimilable, dans la phase direct, par commodité, à un signal carré VR, de rapport cyclique ou fréquence modulable et dont les amplitudes sont variables en fonction de la gamme de voltage choisie pour le convertisseur. Cette tension d'entrée du redresseur 1 est en fait la tension issue du secondaire 2 du transformateur 3, et, outre le fait qu'elle alimente l'application, elle sert aussi de signal de commande des MOSFET 11, 14.

Dans le pallier positif du signal carré, c'est le transistor MOSFET direct 11 qui est commandé pour conduire et le transistor MOSFET de roue libre 14 qui est commander pour ne pas conduire. Le signal d'entrée 20 proportionnel à la tension à l'entrée du redresseur 1 est généré par des moyens de mesure de tension 30.

Le dispositif de commande 19 compare le signal d'entrée 20 avec la valeur seuil 25. Cette valeur seuil 25 est une tension de référence. Cette tension de référence peut être, par exemple, une tension proportionnelle à la tension contrôlée en sortie de la chaîne de conversion (sortie du filtre). Cette valeur est choisie en fonction du niveau de tension en dessous duquel la tension de grille résultant du passage à travers le pont diviseur 13 de la tension d'entrée du redresseur 1, est trop faible, générant des pertes importantes et des problèmes de stress en dynamique de commutation des transistors MOSFET.

Pour des tensions d'entrée du redresseur 1 supérieures à cette valeur seuil, le dispositif de commande 19 commande l'interrupteur 17 en position ouverte, la tension de grille étant limitée par le pont diviseur 13.

Pour des tensions d'entrée du redresseur 1 inférieures à cette valeur seuil, le dispositif de commande 19 commande l'interrupteur 17 en position fermée, la tension d'entrée du redresseur 1 débite alors directement dans la grille du transistor MOSFET direct 11.

Lors du pallier positif du signal carré VR, la grille du transistor MOSFET de roue libre 14 voit une tension négative égale à la chute de tension aux bornes du transistor MOSFET direct 11. La grille du transistor MOSFET de roue libre 14 est ainsi protégée en tension inverse et l'interrupteur 18 peut rester ouvert, quelle que soit l'amplitude de la tension d'entrée du redresseur, durant la conduction du transistor MOSFET direct 11. Pour s'assurer que la tension de grille en valeur absolue reste en dessous du seuil de destruction du MOSFET, l'interrupteur 18 reste ouvert, quelle que soit l'amplitude de la tension d'entrée du redresseur.

Lors du pallier négatif du signal carré c'est le transistor MOSFET de roue libre 14 qui est commandé pour conduire et le transistor MOSFET direct 11 qui est commander pour ne pas conduire. La grille du transistor MOSFET de roue libre 14 voit donc une tension positive. Le fonctionnement décrit lors du pallier positif est alors inversé entre transistor MOSFET direct 11 et le transistor MOSFET roue libre 14.
il peut y avoir plusieurs valeurs seuil 25 différentes, par exemple une valeur dédiée au transistor MOSFET direct 11 et une valeur dédiée au transistor MOSFET de roue libre 14 et cela pour optimiser les pertes de chaque transistor MOSFET du redresseur suivant la tension d'entrée.

Les signaux de commande 21, 22 peuvent être générés de façon dépendante, ou par deux circuits de commande indépendants.

Dans la forme de réalisation représentée sur la figure 2, les moyens de mesure de tension 30 comprennent une diode 23 montée en série avec une capacité de mesure 24, et connectées entre la seconde entrée de redresseur 27 et la première sortie de redresseur 9. Le signal d'entrée 20 est piqué entre ladite diode 23 et la capacité de mesure 24.

la diode 23 est passante lors du pallier positif, et alimente la capacité de mesure 24 générant le signal d'entrée 20 proportionnel à la tension à l'entrée du redresseur. Lors du pallier négatif, c'est la valeur 20 mesurée pendant le pallier positif qui sera utilisée pour commander l'interrupteur 18 du transistor MOSFET de roue libre 14.

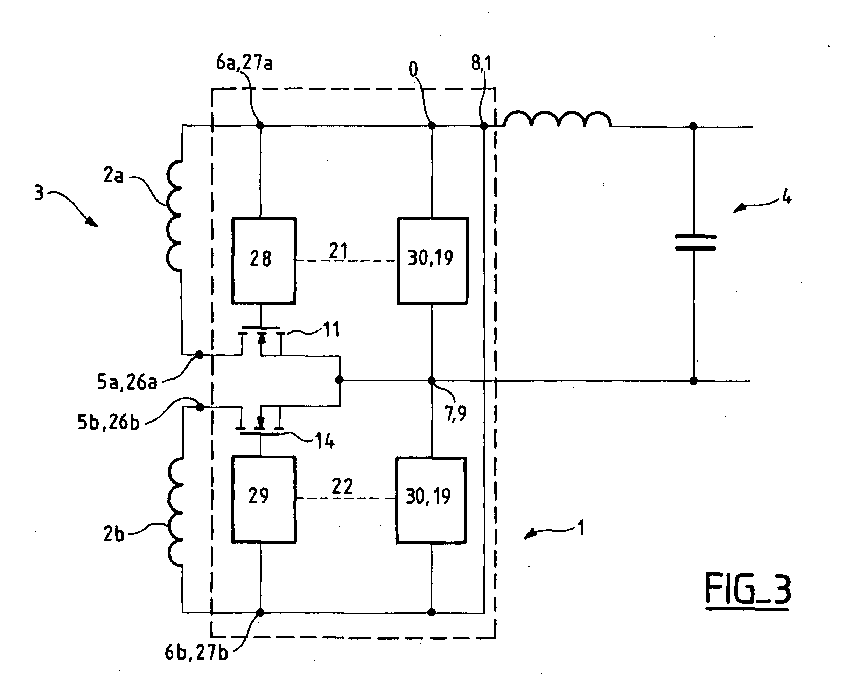

La figure 3 est un diagramme schématique d'un redresseur synchrone auto-commandé symétrique selon l'invention. Cette fois les deux transistors MOSFETs 11,14 assure le transfert direct d'énergie. Le principe de fonctionnement du redresseur est celui des systèmes de transfert direct d'énergie symétrique connu de l'homme de l'art. Les principes de détection et protection de grille décrits pour le système asymétrique sont intégralement applicables.

Dans cette forme de réalisation symétrique l'enroulement secondaire 2 de transformateur 3 comprend un premier et un second sous-enroulements 2a, 2b en opposition de phase, chaque sous-enroulement comprenant une première et une seconde extrémités de transformateur 5a, 6a ; 5b, 6b, et un filtre LC 4 ayant une première et une seconde entrée de filtre 7, 8.

Le redresseur synchrone auto-commandé symétrique comprend :
- une première et une seconde entrée de redresseur 26a, 27a connectées respectivement aux extrémités de transformateur 5a, 6a du premier sous-enroulement 2a définissant un premier sous-ensemble
- une première et une seconde entrée de redresseur 26b, 27b connectées respectivement aux extrémités de transformateur 5b, 6b du second sous-enroulement 2b définissant un second sous-ensemble
- une première et une seconde sortie de redresseur 9, 10, la seconde sortie de redresseur 10 étant connectée à la seconde entrée de redresseur 27a du premier sous-ensemble,
- un 11 des transistors MOSFET 11,14 étant connecté entre la première entrée de redresseur 26a du premier sous-ensemble et la première sortie de redresseur 9 et ayant une connexion de grille 12 connectée à la seconde entrée de redresseur 27a du premier sous-ensemble ladite connexion de grille 12 étant montée en série avec le circuit de protection de grille 28
- l'autre 14 des transistor MOSFET 11,14 étant connecté entre la première entrée de redresseur 26b du second sous-ensemble et la première sortie de redresseur 9 et ayant une connexion de grille 15 connectée à la seconde entrée de redresseur 27b du second sous-ensemble ladite connexion de grille 15 étant montée en série avec le circuit de protection de grille 29.

Bien entendu, l'invention n'est pas limitée aux modes de réalisations décrits et représentés, mais elle est susceptible de nombreuses variantes accessibles à l'homme du métier sans que l'on s'écarte de l'invention.

L'invention inclue notamment tous les moyens connus qui permettent de mesurer la tension d'entrée du redresseur ou un équivalent, tous les moyens connus qui permettent de comparer cette valeur mesurée à une valeur de référence, et tous les moyens connus permettant de court-circuiter le (les) pont(s) diviseur(s) du redresseur selon des règles préétablies en fonction du sens de la comparaison.

## Revendications

1. Redresseur synchrone auto-commandé connecté entre un enroulement secondaire (2) de transformateur (3), et un filtre LC (4), ledit redresseur synchrone auto-commandé comprenant
- deux transistors MOSFET (11, 14) ayant chacun une connexion de grille (12, 15), lesdites connexions de grille (12, 15) étant chacune montée en série avec un circuit de protection de grille (28, 29),
**caractérisé en ce que**, chaque circuit de protection de grille (28, 29), comprend un pont diviseur (13, 16), et, montée en parallèle avec le pont diviseur (13, 16), un interrupteur (17, 18) ayant une position ouverte et une position fermée, et **en ce que** le redresseur (1) comprend un dispositif de commande (19) des interrupteurs (17, 18), ledit dispositif de commande (19) recevant un signal d'entrée (20) proportionnel à la tension à l'entrée du redresseur (1) et émettant des signaux de sortie (21, 22) pour commander les interrupteurs (17, 18).

2. Redresseur synchrone auto-commandé selon la revendication 1 connecté entre l'enroulement secondaire (2) de transformateur (3) ayant une première et une seconde extrémités de transformateur (5, 6), et le filtre LC (4) ayant une première et une seconde entrée de filtre (7, 8), **caractérisé en ce que** ledit redresseur synchrone auto-commandé comprend
- une première et une seconde entrée de redresseur (26, 27) connectées respectivement à la première et la seconde extrémités de transformateur (5, 6)
- une première et une seconde sortie de redresseur (9, 10), la seconde sortie de redresseur (10) étant connectée à la seconde entrée de redresseur (27),
- le transistor MOSFET direct (11) étant connecté entre la première entrée de redresseur (26) et la première sortie de redresseur (9) et ayant une connexion de grille (12) connectée à la seconde entrée de redresseur (27) ladite connexion de grille (12) étant montée en série avec le circuit de protection de grille
- le transistor MOSFET de roue libre (14) étant connecté entre la première sortie de redresseur (9) et la seconde sortie de redresseur (10) et ayant une connexion de grille (15) connectée à la première entrée de redresseur (26) ladite connexion de grille (15) étant montée en série le circuit de protection de grille.

3. Redresseur synchrone auto-commandé selon la revendication 1 l'enroulement secondaire (2) de transformateur (3) comprenant un premier et un second sous-enroulements (2a, 2b) en opposition de phase, chaque sous-enroulement comprenant une première et une seconde extrémités de transformateur (5a, 6a ; 5b, 6b), et un filtre LC (4) ayant une première et une seconde entrée de filtre (7, 8), **caractérisé en ce que** ledit redresseur synchrone auto-commandé comprend
- une première et une seconde entrée de redresseur (26a, 27a) connectées respectivement aux extrémités de transformateur (5a, 6a) du premier sous-enroulement (2a) définissant un premier sous-ensemble
- une première et une seconde entrée de redresseur (26b, 27b) connectées respectivement aux extrémités de transformateur (5b, 6b) du second sous-enroulement (2b) définissant un second sous-ensemble
- une première et une seconde sortie de redresseur (9, 10), la seconde sortie de redresseur (10) étant connectée à la seconde entrée de redresseur (27a) du premier sous-ensemble,
- un (11) des transistors MOSFET (11, 14) étant connecté entre la première entrée de redresseur (26a) du premier sous-ensemble et la première sortie de redresseur (9) et ayant une connexion de grille (12) connectée à la seconde entrée de redresseur (27a) du premier sous-ensemble ladite connexion de grille (12) étant montée en série avec le circuit de protection de grille (28)
- l'autre (14) des transistor MOSFET (11,14) étant connecté entre la première entrée de redresseur (26b) du second sous-ensemble et la première sortie de redresseur (9) et ayant une connexion de grille (15) connectée à la seconde entrée de redresseur (27b) du second sous-ensemble ladite connexion de grille (15) étant montée en série avec le circuit de protection de grille (29).

4. Redresseur synchrone auto-commandé selon l'une quelconque des revendications 1 à 3 **caractérisé en ce que** le dispositif de commande (19) génère deux signaux de sortie (21, 22) indépendant l'un de l'autre, chaque signal commandant un des interrupteurs (17, 18).

5. Redresseur synchrone auto-commandé selon l'une quelconque des revendications 1 à 3 **caractérisé en ce que** le dispositif de commande (19) génère deux signaux de sortie (21, 22) dépendant l'un de l'autre, chaque signal commandant un des interrupteurs (17, 18).

6. Redresseur synchrone auto-commandé selon l'une quelconque des revendications 1 à 5 **caractérisé en ce que** le dispositif de commande (19) comprend des moyens pour générer au moins une valeur seuil (25), et des moyens de comparaison du signal d'entrée (20) proportionnel à la tension d'entrée de redresseur avec ladite valeur seuil (25), et **en ce que** les signaux de sortie (22, 21) sont fonction du sens de la comparaison entre le signal d'entrée (20) proportionnel à la tension d'entrée de redresseur avec ladite valeur seuil (25).

7. Redresseur synchrone auto-commandé selon l'une quelconque des revendications 1 à 6 **caractérisé en ce qu'**il comprend des moyens de mesure de tension (30) comprenant une diode (23) montée en série avec une capacité de mesure (24), et connectées entre la seconde entrée de redresseur (27) et la première sortie de redresseur (9), le signal d'entrée (20) étant piqué entre ladite diode (23) et la capacité de mesure (24).

## Claims

1. A self-regulated synchronous rectifier connected between a secondary winding (2) of a transformer (3) and an LC filter (4), said self-regulated synchronous rectifier comprising:
- two MOSFET transistors (11, 14) each having a gate terminal (12, 15), said gate terminals (12, 15) being each connected in series with a gate protection circuit (28, 29),
**characterized in that** each gate protection circuit (28, 29) comprises a divider bridge (13, 16) and a switch (17, 18) connected in parallel with said divider bridge (13, 16) and having an open position and a closed position, and **in that** said rectifier (1) comprises a device for controlling (19) said switches, said control device (19) receiving an input signal (20) proportional to the input voltage of said rectifier (1) and producing output signals (21, 22) for controlling said switches (17, 18).

2. The self-regulated synchronous rectifier of claim 1, when connected between the secondary winding (2) of said transformer (3), which has first and second transformer ends (5, 6), and said LC filter (4), which has first and second filter inputs (7, 8), **characterized in that** said self-regulated synchronous rectifier comprises:
- first and second rectifier inputs (26, 27) respectively connected to said first and second transformer ends (5, 6),
- first and second rectifier outputs (9, 10), said second rectifier output (10) being connected to said second rectifier input (27),
- said direct MOSFET transistor (11) being connected between said first rectifier input (26) and said first rectifier output (9) and having a gate terminal (12) connected to said second rectifier input (27) and in series with said gate protection circuit,
- said freewheel MOSFET transistor (14) being connected between said first rectifier output (9) and said second rectifier output (10) and having a gate terminal (15) connected to said first rectifier input (26) and in series with said gate protection circuit.

3. The self-regulated synchronous rectifier of claim 1, wherein said secondary winding (2) of said transformer (3) comprises first and second sub-windings (2a, 2b) of opposite phase, each of said sub-windings having first and second transformer ends (5a, 6a; 5b, 6b), and an LC filter (4) having first and second filter inputs (7, 8), **characterized in that** said self-regulated synchronous rectifier comprises:
- first and second rectifier inputs (26a, 27a) respectively connected to said transformer ends (5a, 6a) of said first sub-winding (2a) defining a first subsystem,
- first and second rectifier inputs (26b, 27b) respectively connected to said transformer ends (5b, 6b) of said second sub-winding (2b) defining a second subsystem,
- first and second rectifier outputs (9, 10), said second rectifier output (10) being connected to said second rectifier input (27a) of said first subsystem,
- one MOSFET transistor (11) being connected between said first rectifier input (26a) of said first subsystem and said first rectifier output (9) and having a gate terminal (12) connected to said second rectifier input (27a) of said first subsystem and in series with said gate protection circuit (28),
- the other MOSFET transistor (14) being connected between said first rectifier input (26b) of said second subsystem and said first rectifier output (9) and having a gate terminal (15) connected to said second rectifier input (27b) of said second subsystem and in series with said gate protection circuit (29).

4. The self-regulated synchronous rectifier of any one of claims 1 to 3,
**characterized in that** said control device (19) generates two output signals (21, 22) independent of each other, each signal controlling one of said switches (17, 18).

5. The self-regulated synchronous rectifier of any one of claims 1 to 3,
**characterized in that** said control device (19) generates two output signals (21, 22) dependent of each other, each signal controlling one of said switches (17, 18).

6. The self-regulated synchronous rectifier of any one of claims 1 to 5,
**characterized in that** said control device (19) comprises means for generating at least one threshold value (25) and means for comparing said input signal (20) proportional to said rectifier input voltage with said threshold value (25) and **in that** said output signals (22, 21) are a function of the direction of the comparison between said input signal (20) proportional to said rectifier input voltage and said threshold value (25).

7. The self-regulated synchronous rectifier of any one of claims 1 to 6,
**characterized in that** it comprises voltage measuring means (30) comprising a diode (23) connected in series with a measurement capacitor (24) between said second rectifier input (27) and said first rectifier output (9), said input signal (20) being taken off between said diode (23) and said measurement capacitor (24).

## Patentansprüche

1. Selbstgesteuerter Synchrongleichrichter, der zwischen einer Sekundärwicklung (2) eines Transformators (3) und einem LC-Filter (4) angeschlossen ist, wobei der selbstgesteuerte Synchrongleichrichter folgendes umfaßt:
- zwei MOS-Feldeffekttransistoren (11, 14), die jeweils einen Gateanschluß (12, 15) haben, wobei die Gateanschlüsse (12, 15) jeweils mit einer Gateschutzschaltung (28, 29) in Reihe geschaltet sind,
**dadurch gekennzeichnet, daß** jede Gateschutzschaltung (28, 29) eine Teilerbrücke (13, 16) sowie - zu der Teilerbrücke (13, 16) parallel geschaltet - einen Schalter (17, 18) mit einer geöffneten Stellung und einer geschlossenen Stellung umfaßt, und daß der Gleichrichter (1) eine Vorrichtung (19) zur Steuerung der Schalter (17, 18) aufweist, wobei die Steuervorrichtung (19) ein zur Spannung am Eingang des Gleichrichters (1) proportionales Eingangssignal (20) empfängt und Ausgangssignale (21, 22) zur Steuerung der Schalter (17, 18) aussendet.

2. Selbstgesteuerter Synchrongleichrichter nach Anspruch 1, der zwischen der Sekundärwicklung (2) des Transformators (3), welcher ein erstes und ein zweites Transformatorende (5, 6) aufweist, und dem LC-Filter (4), das einen ersten und einen zweiten Filtereingang (7, 8) aufweist, angeschlossen ist, **dadurch gekennzeichnet, daß** der selbstgesteuerte Synchrongleichrichter folgendes umfaßt:
- einen ersten und einen zweiten Gleichrichtereingang (26, 27), die an das erste bzw. an das zweite Transformatorende (5, 6) angeschlossen sind,
- einen ersten und einen zweiten Gleichrichterausgang (9, 10), wobei der zweite Gleichrichterausgang (10) an den zweiten Gleichrichtereingang (27) angeschlossen ist,
- wobei der direkte MOS-FET (11) zwischen dem ersten Gleichrichtereingang (26) und dem ersten Gleichrichterausgang (9) angeschlossen ist und einen Gateanschluß (12) aufweist, der an den zweiten Gleichrichtereingang (27) angeschlossen ist, wobei der Gateanschluß (12) mit der Gateschutzschaltung in Reihe geschaltet ist,
- wobei der Freilauf-MOS-FET (14) zwischen dem ersten Gleichrichterausgang (9) und dem zweiten Gleichrichterausgang (10) angeschlossen ist und einen Gateanschluß (15) aufweist, der an den ersten Gleichrichtereingang (26) angeschlossen ist, wobei der Gateanschluß (15) mit der Gateschutzschaltung in Reihe geschaltet ist.

3. Selbstgesteuerter Synchrongleichrichter nach Anspruch 1, wobei die Sekundärwicklung (2) des Transformators (3) eine erste und eine zweite Unterwicklung (2a, 2b) in entgegengesetzter Phase umfaßt, wobei jede Unterwicklung ein erstes und ein zweites Transformatorende (5a, 6a; 5b, 6b) aufweist, und wobei ein LC-Filter (4), einen ersten und einen zweiten Filtereingang (7, 8) aufweist, **dadurch gekennzeichnet, daß** der selbstgesteuerte Synchrongleichrichter folgendes umfaßt:
- einen ersten und einen zweiten Gleichrichtereingang (26a, 27a), die an die Transformatorenden (5a bzw. 6a) der eine erste Untereinheit bildenden ersten Unterwicklung (2a) angeschlossen sind,
- einen ersten und einen zweiten Gleichrichtereingang (26b, 27b), die an die Transformatorenden (5b bzw. 6b) der eine zweite Untereinheit bildenden zweiten Unterwicklung (2b) angeschlossen sind,
- einen ersten und einen zweiten Gleichrichterausgang (9, 10), wobei der zweite Gleichrichterausgang (10) an den zweiten Gleichrichtereingang (27a) der ersten Untereinheit angeschlossen ist,
- wobei einer (11) der MOS-FETs (11, 14) zwischen dem ersten Gleichrichtereingang (26a) der ersten Untereinheit und dem ersten Gleichrichterausgang (9) angeschlossen ist und einen Gateanschluß (12) aufweist, der an den zweiten Gleichrichtereingang (27a) der ersten Untereinheit angeschlossen ist, wobei der Gateanschluß (12) mit der Gateschutzschaltung (28) in Reihe geschaltet ist,
- wobei der andere (14) der MOS-FETs (11, 14) zwischen dem ersten Gleichrichtereingang (26b) der zweiten Untereinheit und dem ersten Gleichrichterausgang (9) angeschlossen ist und einen Gateanschluß (15) aufweist, der an den zweiten Gleichrichtereingang (27b) der zweiten Untereinheit angeschlossen ist, wobei der Gateanschluß (15) mit der Gateschutzschaltung (29) in Reihe geschaltet ist.

4. Selbstgesteuerter Synchrongleichrichter nach einem der Ansprüche 1 bis 3,
**dadurch gekennzeichnet, daß** die Steuervorrichtung (19) zwei voneinander unabhängige Ausgangssignale (21, 22) erzeugt, wobei jedes Signal einen der Schalter (17, 18) steuert.

5. Selbstgesteuerter Synchrongleichrichter nach einem der Ansprüche 1 bis 3,
**dadurch gekennzeichnet, daß** die Steuervorrichtung (19) zwei voneinander abhängige Ausgangssignale (21, 22) erzeugt, wobei jedes Signal einen der Schalter (17, 18) steuert.

6. Selbstgesteuerter Synchrongleichrichter nach einem der Ansprüche 1 bis 5,
**dadurch gekennzeichnet, daß** die Steuervorrichtung (19) Mittel zum Erzeugen wenigstens eines Schwellenwertes (25) sowie Mittel zum Vergleichen des zur Gleichrichter-Eingangsspannung proportionalen Eingangssignals (20) mit dem Schwellenwert (25) umfaßt, und daß die Ausgangssignale (22, 21) von der Richtung des Vergleichs zwischen dem zur Gleichrichter-Eingangsspannung proportionalen Eingangssignals (20) und dem Schwellenwert (25) abhängig sind.

7. Selbstgesteuerter Synchrongleichrichter nach einem der Ansprüche 1 bis 6,
**dadurch gekennzeichnet, daß** er Spannungsmeßmittel (30) aufweist, die eine Diode (23) umfassen, welche mit einer Meßkapazität (24) in Reihe geschaltet ist, die beide zwischen dem zweiten Gleichrichtereingang (27) und dem ersten Gleichrichterausgang (9) angeschlossen sind, wobei das Eingangssignal (20) zwischen der Diode (23) und der Meßkapazität (24) abgegriffen wird.
